# FASCICULE DE BREVET EUROPEEN

(11) **EP 0 407 537 B1**
(45) Date de publication et mention de la délivrance du brevet: **14.04.1993**
(21) Numéro de dépôt: 90901735.2
(22) Date de dépôt: 30.01.1990
(51) Int. Cl.: B23Q 7/04, B23Q 7/14, B24B 27/00, B25J 9/00

(54) **MACHINE ET PROCEDE D'USINAGE ET/OU DE FINISSAGE DE PIECES DE MECANIQUE MOULEES OU USINEES**
MASCHINE UND VERFAHREN ZUM BEARBEITEN UND/ODER FERTIGBEARBEITEN VON GEGOSSENEN ODER BEARBEITETEN WERKSTÜCKEN
MACHINE AND METHOD FOR MACHINING AND/OR FINISHING MOLDED OR MACHINED MECHANICAL PARTS

(30) Priorité: 30.01.1989 FR 8901325
(43) Date de publication de la demande: 16.01.1991
(73) Titulaire: BULA & FILS S.A., CH-1599 Henniez (CH)
(72) Inventeur: BULA, Bernard, CH-1522 Curtilles (CH)
(74) Mandataire: Nithardt, Roland
(86) Numéro de dépôt international: CH9000020
(87) Numéro de publication internationale: WO9008623

(56) Documents cités:
- WO-A-70/1333
- DE-U- 8 715 326
- FR-A- 2 586 908
- GB-A- 1 566 444
- Sheet Metal Industries, vol. 52, Nr. 5, mai 1975, (Redhill, GB), J.P. Dewar: "Automatic polishing machines - types and applications - part 2", pages 254-259
- Robotics Engineering, vol. 8, Nr. 11, novembre 1986 (Petersborough, NH, US), M. Saigo et al.: "Coordinating a dual-arm assembly robot", pages 8-12
- Technische Rundschau, vol. 76, Nr. 12, partie 2, 20 mars 1984, (Bern, CH), D. Hilti et al.: "Entgraten mit dem Roboter", pages 9-24

## Description

La présente invention concerne une machine d'usinage et/ou de finissage de pièces de mécanique moulées ou usinées, comportant une enceinte fermée, des unités d'usinage et de finissage desdites pièces, un dispositif d'approvisionnement pour amener ces pièces dans ladite enceinte, des moyens pour prendre en charge lesdites pièces et pour les présenter auxdites unités d'usinage et/ou de finissage en vue de leur traitement, et des moyens pour les évacuer après ce traitement, dans laquelle lesdits moyens pour prendre en charge lesdites pièces et pour les présenter auxdites unités d'usinage et/ou de finissage comportent deux robots manipulateurs du type à six axes, ces robots étant associés chacun à au moins une unité d'usinage et/ou de finissage.

Elle concerne également un procédé d'usinage et/ou de finissage de pièces de mécanique moulées ou usinées, au moyen d'une machine comportant une enceinte fermée, des unités d'usinage et/ou de finissage desdites pièces, un dispositif d'approvisionnement pour amener ces pièces dans ladite enceinte, des moyens pour prendre en charge lesdites pièces et pour les présenter auxdites unités d'usinage et/ou de finissage en vue de leur traitement, et des moyens pour les évacuer après ce traitement.

On connaît déjà différentes machines d'usinage et/ou de finissage, montées à l'intérieur d'une enceinte fermée, comportant un robot manipulateur pour présenter des pièces ou des parties de pièces à traiter à une ou de préférence plusieurs unités de finissage. Les unités de finissage sont en général des machines d'ébavurage, de brossage, de ponçage, de polissage, de meulage, etc., et le robot manipulateur est de préférence un robot du type pendulaire conçu pour permettre de déplacer les pièces selon des trajectoires complexes en vue de les présenter aux différentes unités de finissage. Une telle machine est par exemple illustrée par la publication WO-A-87/01333. Ces machines se prêtent particulièrement bien au finissage de pièces fabriquées en séries relativement petites, lorsque les opérations sont sensiblement les mêmes pour toutes.

Néanmoins, lorsque les opérations sont différentes ou lorsque l'on souhaite combiner des interventions d'usinage et des interventions de finissage sur un même équipement, les machines connues ne permettent plus d'intervenir de manière simple.

En particulier, lorsque les pièces sont saisies par un robot manipulateur, la zone de la pièce dans laquelle le robot la maintient, ne peut pas être usinage ou finie au cours d'une seule opération. Ceci nécessite habituellement une reprise par le même robot pour une deuxième phase de traitement. La perte de temps est certaine et la rentabilité d'une production est handicapée par une double opération séparée par une phase de stockage intermédiaire suivie d'une reprise.

La présente invention a pour but de pallier ces inconvénients en proposant une machine universelle qui peut être adaptée de façon extrêmement rapide et simple à divers modes d'utilisation aussi différents que les modes d'usinage et les modes de finissage. En outre, la machine proposée permet de combiner ces deux modes de fonctionnement et notamment d'effectuer une des opérations en temps réel, alors que l'autre opération s'effectue simultanément en temps caché.

Dans ce but, la machine selon l'invention est caractérisée en ce que ces robots sont agencés pour se transmettre directement des pièces en vue de leur traitement successif par lesdites unités d'usinage et/ou de finissage.

Selon un mode de réalisation particulièrement avantageux, les robots manipulateurs sont du type pendulaire et sont montés au haut de ladite enceinte.

Selon une variante, les deux robots manipulateurs sont disposés symétriquement par rapport au plan médian de la machine et chacun de ces robots est associé à plusieurs unités d'usinage et/ou de finissage.

De préférence, l'un des robots manipulateurs est agencé pour maintenir les pièces dans une première zone prévue pour être traitée par les unités d'usinage et/ou de finissage associées à l'autre robot et cet autre robot est agencé pour maintenir les pièces dans une deuxième zone préalablement traitée par les unités d'usinage et/ou de finissage associées au premier robot.

Selon un mode de réalisation préféré, le dispositif d'approvisionnement peut comporter au moins un dispositif de chargement conçu pour recevoir des pièces à usiner et/ou à finir, ce dispositif étant accessible à au moins un des robots manipulateurs.

Pour permettre un approvisionnement de la machine en pièces à traiter qui soit sûr et sans danger pour l'utilisateur, le dispositif de chargement comporte un sas de sécurité pourvu d'un guichet d'accès extérieur, ce guichet étant fermé lorsque l'accès du sas par l'un des robots est autorisé.

Le procédé selon l'invention est caractérisé en ce que l'on prend les pièces en charge au moyen d'un premier robot manipulateur du type à six axes, en ce que l'on présente ces pièces à au moins une unité d'usinage et/ou de finissage associée audit premier robot, en ce que l'on usine et/ou on finit les pièces partiellement sur cette unité, en ce que l'on transfère immédiatement sans stockage intermédiaire ces pièces partiellement usinées et/ou finies à un second robot manipulateur du type à six axes, en ce que l'on présente ces pièces à au moins une unité d'usinage et/ou de finissage associé audit second robot, en ce que l'on usine et/ou on finit les pièces préalablement partiellement traitées sur cette unité, et en ce que l'on transfère les pièces entièrement usinées et/ou finies vers lesdits moyens pour les évacuer.

De préférence, l'on traite au moins une partie de la surface desdites pièces au moyen de l'unité d'usinage et/ou de finissage associée audit premier robot manipulateur, et l'on traite une autre partie de la surface desdites pièces au moyen de l'unité d'usinage et/ou de finissage associée audit second robot manipulateur.

Selon une forme avantageuse du procédé, le premier robot manipulateur peut maintenir les pièces dans une première zone qui fait partie de la surface traitée par l'unité d'usinage et/ou de finissage associée audit second robot et ledit second robot manipulateur peut maintenir les pièces dans une seconde zone qui fait partie de la surface traitée par l'unité d'usinage et/ou de finissage associée audit premier robot.

Dans cette forme de réalisation, le premier robot manipulateur prend en charge les pièces dans un sas de sécurité pourvu d'un guichet d'accès extérieur, ce guichet étant fermé lorsque l'accès du robot au sas est autorisé.

La présente invention sera mieux comprise en référence à la description d'un exemple de réalisation et du dessin annexé dans lequel :
- la figure 1 représente une vue schématique de dessus d'une première forme de réalisation de la machine selon l'invention,
- la figure 2 représente une vue en élévation d'une des deux parties sensiblement identiques de la machine de la figure 1,
- la figure 3 représente une vue en plan, similaire à celle de la figure 1, mais illustrant une autre forme de réalisation de la machine selon l'invention, et
- la figure 4 représente schématiquement une vue en élévation d'un des dispositifs de chargement de la machine des figures 1 et 2.

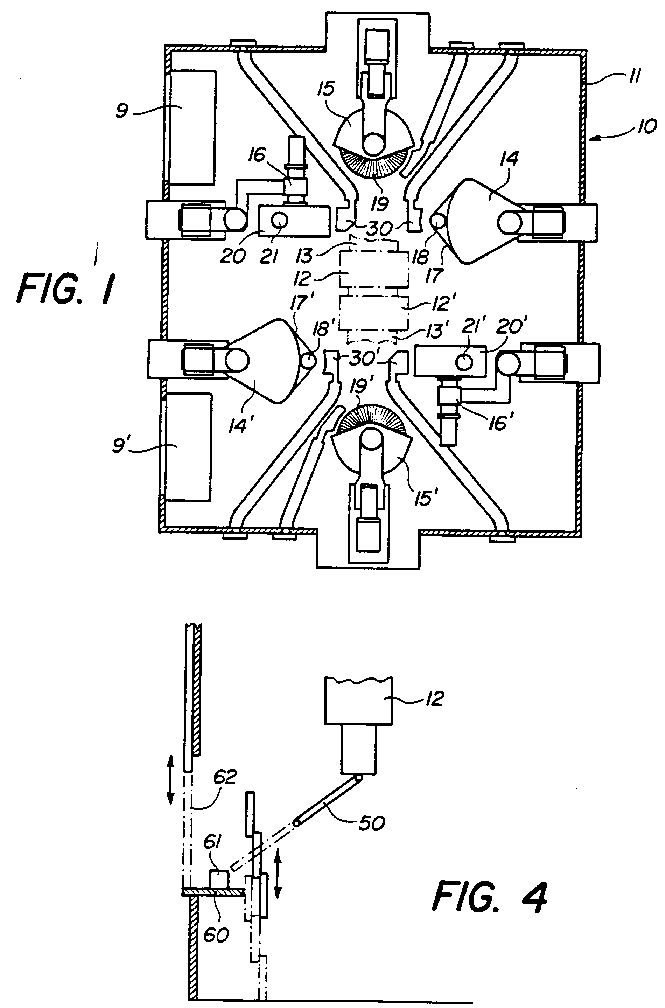

En référence à la figure 1, la machine 10 représentée comporte essentiellement une enceinte fermée 11 à l'intérieur de laquelle sont suspendus deux robots manipulateurs programmables respectivement 12 et 12′, du type pendulaire, fixés à une poutre transversale 13 (représentée partiellement). Ces robots manipulateurs comportent avantageusement six axes mais peuvent être remplacés aisément par des robots à neuf axes pour augmenter la flexibilité du système en accroissant les dimensions de l'espace accessible par les bras (non représentés) de ces robots.

La machine telle que le montre la figure 1 comporte par exemple trois paires d'unités de finissage respectivement 14, 14′;15, 15′ et 16, 16′ destinées chacune à effectuer une opération différente sur des pièces brutes à traiter. Les unités de finissage 14 et 14′ sont constituées dans ce cas par une bande équipée d'une toile émeri 17, respectivement 17′, entraînée en rotation autour d'un galet de guidage 18, respectivement 18′, d'axe vertical. Les unités de finissage 15 et 15′ sont des unités de brossage équipées de brosses 19, respectivement 19′, d'axe vertical. Les unités de finissage 16 et 16′ sont dans ce cas constituées par des polisseuses comportant des brosses à polir 20, respectivement 20′, d'axe horizontal de préférence, respectivement associées aux distributeurs automatiques 21 et 21′ de pâte à polir.

Il est bien évident que le nombre et la nature des différentes unités de finissage peuvent être variés à volonté en fonction des opérations que l'on doit faire subir à une pièce pour que sa surface atteigne l'état désiré.

Dans l'exemple représenté par la figure, l'enceinte 11 de la machine 10 comporte deux dispositifs de chargement 9 et 9′ qui seront décrits plus en détail en référence à la figure 4 et qui reçoivent les pièces à traiter qui sont prélevées automatiquement par les bras (non représentés) des robots manipulateurs 12 et 12′. Selon une variante, l'un des dispositifs de chargement, par exemple 9, est seul utilisé pour l'approvisionnement des deux robots manipulateurs et l'autre dispositif de chargement 9′ sert à l'évacuation des pièces traitées. Dans ce cas, le processus de fonctionnement peut être le suivant : le robot manipulateur 12 prélève une pièce dans le dispositif de chargement 9 et lui fait subir l'ensemble des traitements requis et exécutés par les différentes unités de finissage. A la fin de ce processus, le même bras manipulateur 12 dépose la pièce terminée dans le dispositif 9′ qui est dans ce cas un dispositif d'évacuation. Parallèlement à cette intervention, le robot manipulateur 12′ prélève une deuxième pièce dans le dispositif de chargement 9 et fait exécuter les opérations de finissage requises exécutées par les unités de finissage correspondantes avant de déposer la pièce traitée dans le dispositif d'évacuation 9′. Dans le cas où les unités de finissage 14′, 15′ et 16′ sont différentes des unités correspondantes 14, 15 et 16 et sont complémentaires à ces premières, on peut imaginer que le robot manipulateur 12 après avoir prélevé une pièce dans l'unité de chargement 9 fait exécuter un ensemble d'opérations de finissage par les unités de finissage 14, 15 et 16, transmet la pièce semi-finie au manipulateur 12′ qui fait exécuter les opérations complémentaires requises au traitement de la pièce par des unités de finissage 14′. 15′ et 16′ avant de déposer la pièce finie dans le dispositif d'évacuation 9′. A chaque unité de finissage est associé un dispositif d'aspiration comportant une tête d'aspiration 30, respectivement 30′, connectée par un conduit flexible 31, respectivement 31' à une installation d'aspiration non représentée.

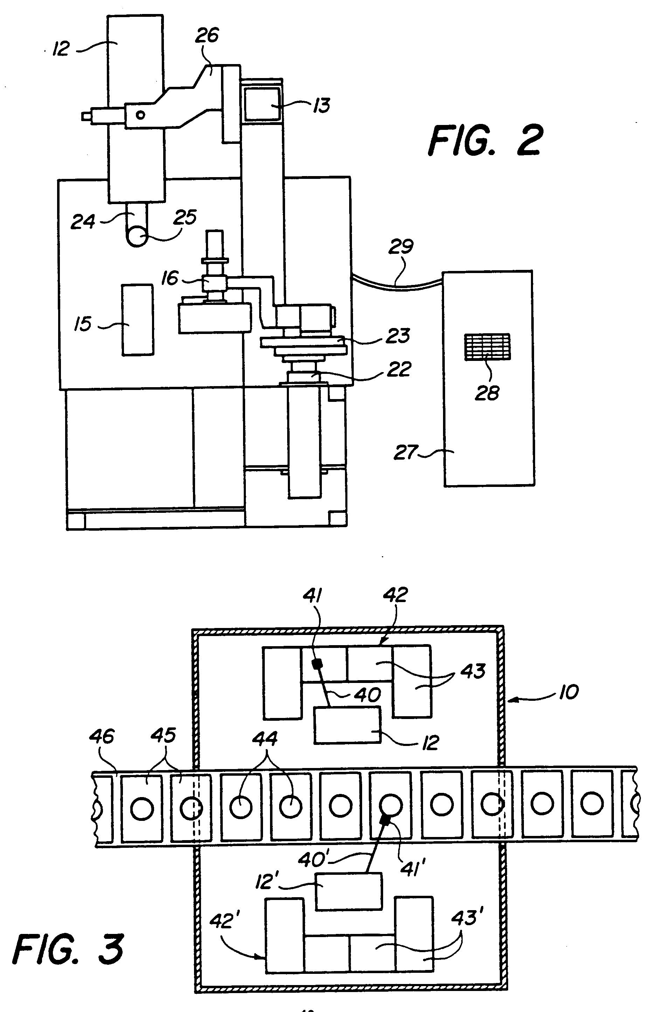

A titre d'illustration, la figure 2 est une vue en élévation de l'une des deux parties composant la machine 10 de la figure 1. Comme le montre cette figure, chaque unité de finissage est portée par un support mobile composé essentiellement d'une colonne télescopique 22, par exemple du type à vis, qui supporte une colonne 23 susceptible de se déplacer dans un plan horizontal. Selon une forme de réalisation particulière, la coulisse 23 peut être pivotante; selon un autre mode de réalisation particulier, le support de l'unité de finissage peut être rotatif par rapport à la coulisse. Dans les deux cas, l'unité de finissage peut être ajustée en hauteur, en position angulaire et en translation horizontale.

Le robot manipulateur 12 est monté au haut de l'enceinte de telle manière que son bras manipulateur 24, terminé par un organe de préhension 25 du type mandrin de serrage, pince hydraulique, pneumatique ou mécanique, électro-aimant, etc., puisse amener les pièces à traiter en contact avec les différentes unités de finissage. Dans ce but, le robot du type pendulaire est avantageusement monté de façon centrale pour que le bras manipulateur 24 ait un rayon d'action maximal. Ce robot est articulé selon deux axes perpendiculaires sur une potence 26 portée par la poutre transversale 13. Les déplacements du bras manipulateur sont programmés au moyen d'une unité de commande programmable, logée dans une armoire 27, équipée d'une console de programmation 28 et reliée au robot par un câble de liaison 29.

La figure 3 illustre une autre forme de réalisation dans laquelle la machine comporte comme précédemment une enceinte fermée 11 et deux robots manipulateurs respectivement 12 et 12′, de préférence du type pendulaire suspendus à une poutre transversale 13. Dans cette forme de réalisation, les robots sont prévus pour fonctionner comme robots d'usinage. Dans ce but, les bras manipulateurs 40, respectivement 40′, représentés schématiquement, sont terminés par une tête porte-outil 41, respectivement 41′. Ces outils sont disposés dans des magasins 42 et 42′ ayant des compartiments 43 et 43′ et qui sont respectivement associés aux robots 12 et 12′. Les pièces à traiter 44 sont amenées dans l'enceinte sur des palettes 45 disposées sur un convoyeur sans fin 46 qui peut être une bande transporteuse sans fin, un système de rails, etc. Les robots manipulateurs sont commandés de telle manière qu'ils puissent travailler simultanément ou alternativement sur une même pièce 44 ou sur deux pièces successives traversant l'enceinte 10.

Par ailleurs, cette variante pourrait être combinée à la forme de réalisation décrite précédemment et l'un des robots manipulateurs pourrait être un robot d'usinage alors que l'autre pourrait être un robot de transfert des pièces. A titre d'exemple, on suppose que le robot 12 est un robot d'usinage qui est conçu pour effectuer une ou plusieurs opérations d'usinage sur une pièce 44 amenée sur une palette 45. Après cette phase d'usinage, la pièce 44 peut être prélevée par le robot manipulateur 12′ qui pourrait se comporter comme un robot de transfert et amener la pièce semi-finie en contact avec différentes unités de finissage (non représentées).

Le convoyeur est disposé de telle manière que son axe longitudinal soit parallèle ou situé dans le plan médian de la machine 10, les robots manipulateurs 12 et 12′ étant disposés symétriquement par rapport à ce plan.

Cette machine présente une grande souplesse et permet un gain de temps considérable, étant donné que certaines opérations peuvent se faire en temps caché.

La figure 4 illustre schématiquement le dispositif de chargement 9 et/ou 9′. Le robot manipulateur pourvu d'un bras articulé 50 à plusieurs segments est disposé de telle manière qu'il puisse accéder à une plate-forme de chargement 60 sur laquelle est disposée une pièce 61.

Pour des raisons de sécurité, le dispositif de chargement comprenant la plate-forme 60 est pourvu d'un guichet 62 et d'une porte télescopique 63, les deux fonctionnant simultanément de telle manière que le guichet 62 soit toujours fermé lorsque la porte coulissante 63 est ouverte et autorise l'accès du bras manipulateur 50 et que le guichet 62 puisse s'ouvrir lorsque la porte coulissante 63 est fermée et interdit l'accès de ce bras.

## Revendications

1. Machine d'usinage (10) et/ou de finissage de pièces de mécanique moulées ou usinées, comportant une enceinte fermée (11), des unités d'usinage et/ou de finissage (14,15,16,14′,15′,16′) desdites pièces, un dispositif d'approvisionnement (9) pour amener ces pièces dans ladite enceinte (11), des moyens pour prendre en charge lesdites pièces et pour les présenter auxdites unités d'usinage et/ou de finissage (14,15,16,14′,15′,16′) en vue de leur traitement, et des moyens pour les évacuer après ce traitement, dans laquelle lesdits moyens pour prendre en charge lesdites pièces et pour les présenter auxdites unités d'usinage et/ou de finissage (14,15,16,14′,15′,16′) comportent deux robots manipulateurs (12,12′) du type à six axes, ces robots étant associés chacun à au moins une unité d'usinage et/ou de finissage (14,15,16,14′,15′,16′), caractérisée en ce que ces robots (12, 12′) sont agencés pour se transmettre directement des pièces en vue de leur traitement successif par lesdites unités d'usinage et/ou de finissage (14, 15, 16, 14′, 15′, 16′).

2. Machine selon la revendication 1, caractérisée en ce que les robots manipulateurs (12, 12′) sont du type pendulaire et sont montés au haut de ladite enceinte.

3. Machine selon la revendication 1, caractérisée en ce que les deux robots manipulateurs (12, 12′) sont disposés symétriquement par rapport au plan médian de la machine et en ce que chacun de ces robots est associé à plusieurs unités d'usinage et/ou de finissage (14, 15, 16, respectivement 14′, 15′, 16′).

4. Machine selon la revendication 3, caractérisée en ce que l'un des robots manipulateurs (12 ou 12′) est agencé pour maintenir les pièces dans une première zone prévue pour être traitée par les unités d'usinage et/ou de finissage (14′, 15′, 16′ ou 14, 15, 16) associées à l'autre robot (12′ ou 12) et en ce que cet autre robot (12′ ou 12) est agencé pour maintenir les pièces dans une deuxième zone préalablement traitée par les unités d'usinage et/ou de finissage (14, 15, 16 ou 14′, 15′, 16′) associées au premier robot.

5. Machine selon la revendication 1, caractérisée en ce que le dispositif d'approvisionnement comporte au moins un dispositif de chargement (9, 9′) conçu pour recevoir des pièces à usiner et/ou à finir, ce dispositif étant accessible à au moins un des robots manipulateurs (12, 12′) .

6. Machine selon la revendication 5, caractérisée en ce que le dispositif de chargement (9, 9′) comporte un sas de sécurité pourvu d'un guichet (62) d'accès extérieur, ce guichet étant fermé lorsque l'accès du sas par l'un des robots est autorisé.

7. Procédé d'usinage et/ou de finissage de pièces de mécanique moulées ou usinées, au moyen d'une machine (10) comportant une enceinte fermée (11), des unités d'usinage et/ou de finissage (14,15,16,14′,15′,16′) desdites pièces, un dispositif d'approvisionnement (9) pour amener ces pièces dans ladite enceinte (11), des moyens (12,12′) pour prendre en charge lesdites pièces et pour les présenter auxdites unités d'usinage et/ou de finissage en vue de leur traitement, et des moyens (9′) pour les évacuer après ce traitement, caractérisé en ce que l'on prend les pièces en charge au moyen d'un premier robot manipulateur (12) du type à six axes, en ce que l'on présente ces pièces à au moins une unité d'usinage et/ou de finissage associée audit premier robot, en ce que l'on usine et/ou on finit les pièces partiellement sur cette unité, en ce que l'on transfère immédiatement sans stockage intermédiaire ces pièces partiellement usinées et/ou finies à un second robot manipulateur (12′) du type à six axes, en ce que l'on présente ces pièces à au moins une unité d'usinage et/ou de finissage associé audit second robot, en ce que l'on usine et/ou on finit les pièces préalablement partiellement traitées sur cette unité, et en ce que l'on transfère les pièces entièrement usinées et/ou finies vers lesdits moyens pour les évacuer.

8. Procédé selon la revendication 7, caractérisé en ce que l'on traite au moins une partie de la surface desdites pièces au moyen de l'unité d'usinage et/ou de finissage associée audit premier robot manipulateur (12), et en ce que l'on traite une autre partie de la surface desdites pièces au moyen de l'unité d'usinage et/ou de finissage associée audit second robot manipulateur (12′).

9. Procédé selon la revendication 8, caractérisé en ce que le premier robot manipulateur (12) maintient les pièces dans une première zone qui fait partie de la surface traitée par l'unité d'usinage et/ou de finissage associée audit second robot (12′) et en ce que ledit second robot manipulateur maintient les pièces dans une seconde zone qui fait partie de la surface traitée par l'unité d'usinage et/ou de finissage associée audit premier robot.

10. Procédé selon la revendication 7, caractérisé en ce que le premier robot manipulateur (12) prend en charge les pièces dans un sas de sécurité pourvu d'un guichet (62) d'accès extérieur, ce guichet étant fermé lorsque l'accès du robot au sas est autorisé.

## Patentansprüche

1. Maschine (10) für die Bearbeitung und/oder für die Fertigstellung von gegossenen oder bearbeiteten mechanischen Werkstücken, bestehend aus einem geschlossenen Raum (11), aus Einheiten für die Bearbeitung und/oder für die Fertigstellung (14,15,16, 14′,15′,16′) der besagten Werkstücke, aus einer Vorrichtung für die Bereitstellung (9) zur Zuführung dieser Werkstücke in den besagten Raum (11), aus Einrichtungen für die Aufnahme der besagten Werkstücke und für deren Vorlage bei den besagten Einheiten für die Bearbeitung und/oder für die Fertigstellung (14,15,16,14′,15′,16′) zwecks deren Behandlung und aus Einrichtungen (9′) für deren Abtransport nach dieser Behandlung, wobei in dieser Maschine die besagten Einrichtungen für die Aufnahme der besagten Werkstücke und für deren Vorlage bei den besagten Einheiten für die Bearbeitung und/oder für die Fertigstellung (14,15,16, 14′,15′, 16′) zwei Manipulator-Roboter (12,12′) mit sechs Achsen enthalten, wobei jeder dieser Roboter mit mindestens einer Einheit für die Bearbeitung und/ oder für die Fertigstellung (14,15, 16,14′,15′,16′) verbunden ist,
**dadurch gekennzeichnet,** daß diese Roboter (12,12′) eingerichtet sind, um für die einander folgenden Phasen der Behandlung durch die besagten Einheiten für die Bearbeitung und/ oder für die Fertigstellung (14,15,16,14′,15′,16′) sich unmittelbar Werkstücke weiterzureichen.

2. Maschine nach Anspruch 1,
**dadurch gekennzeichnet,** daß die Manipulator-Roboter (12,12′) pendelartig ausgeführt und oben in dem besagten Raum angebracht sind.

3. Maschine nach Anspruch 1,
**dadurch gekennzeichnet,** daß die beiden Manipulator-Roboter (12,12′) gegenüber der mittleren Ebene der Maschine symmetrisch angeordnet sind, und daß jeder dieser Roboter mit mehreren Einheiten für die Bearbeitung und/oder für die Fertigstellung (14,15,16, bzw. 14′,15′,16′) verbunden ist.

4. Maschine nach Anspruch 3,
**dadurch gekennzeichnet,** daß einer der Manipulator-Roboter (12 oder 12′) eingerichtet ist, um die Werkstücke in einer ersten Zone festzuhalten, die für eine Behandlung durch die Einheiten für die Bearbeitung und/oder für die Fertigstellung (14′,15′,16′ oder 14,15,16), die mit dem anderen Roboter (12′ oder 12) verbunden sind, vorgesehen ist, und daß dieser andere Roboter (12′ oder 12) eingerichtet ist, um die Werkstücke in einer zweiten Zone festzuhalten, die vorher durch die Einheiten für die Bearbeitung und/oder für die Fertigstellung (14,15,16 oder 14′,15′,16′), die mit dem ersten Roboter verbunden sind, behandelt wurde.

5. Maschine nach Anspruch 1,
**dadurch gekennzeichnet,** daß die Vorrichtung für die Bereitstellung mindestens eine Vorrichtung für die Beschickung (9,9′) enthält, die ausgelegt ist, um die Werkstücke, die zu bearbeiten oder fertigzustellen sind, einzulegen, wobei diese Vorrichtung für mindestens einen der Manipulator-Roboter (12,12′) erreichbar ist.

6. Maschine nach Anspruch 5,
**dadurch gekennzeichnet,** daß die Vorrichtung für die Beschickung (9,9′) eine Sicherheitsschleuse enthält, die mit einer klappe (62) für einen Zugriff von außen versehen ist, wobei diese klappe geschlossen ist, wenn der Zugang zu der Schleuse durch einen Roboter freigegeben ist.

7. Verfahren für die Bearbeitung und/oder für die Fertigstellung von gegossenen oder bearbeiteten mechanischen Werkstücken mit Hilfe einer Maschine (10) mit einem geschlossenen Raum (11), mit Einheiten für die Bearbeitung und/oder für die Fertigstellung (14,15,16,14′,15′,16′) der besagten Werkstücke, mit einer Vorrichtung für die Bereitstellung (9) zur Zuführung dieser Werkstücke in den besagten Raum (11), mit Einrichtungen (12,12′) für die Aufnahme der besagten Werkstücke und für deren Vorlage bei den besagten Einheiten für die Bearbeitung und/oder für die Fertigstellung zwecks deren Behandlung und mit Einrichtungen (9′) für deren Abtransport nach dieser Behandlung,
**dadurch gekennzeichnet,** daß die Werkstücke mit Hilfe eines ersten Manipulator-Roboter (12) mit sechs Achsen aufgenommen werden, daß diese Werkstücke mindestens einer Einheit für die Bearbeitung und/oder für die Fertigstellung, die mit dem besagten ersten Roboter verbunden ist, vorgelegt werden, daß diese Werkstücke auf dieser Einheit teilweise bearbeitet und/oder fertiggestellt werden, daß diese teilweise bearbeiteten und/oder fertiggestellten Werkstücke unmittelbar, ohne Zwischenlagerung, an einem zweiten Manipulator-Roboter (12′) mit sechs Achsen weitergereicht werden, daß diese Werkstücke mindestens einer Einheit für die Bearbeitung und/oder für die Fertigstellung, die mit dem besagten zweiten Roboter verbunden ist, vorgelegt werden, daß die Werkstücke, die vorher teilweise behandelt wurden, auf dieser Einheit bearbeitet und/oder fertiggestellt werden, und daß die endgültig bearbeiteten und/ oder fertiggestellten Werkstücke zu den besagten Einrichtungen für deren Abtransport befördert werden.

8. Verfahren nach Anspruch 7,
**dadurch gekennzeichnet,** daß mindestens ein Teil der Oberfläche der besagten Werkstücke mit Hilfe der Einheit für die Bearbeitung und/oder für die Fertigstellung, die mit dem besagten ersten Manipulator-Roboter (12) verbunden ist, behandelt wird, und daß ein anderer Teil der Oberfläche der besagten Werkstücke mit Hilfe der Einheit für die Bearbeitung und/oder für die Fertigstellung, die mit dem besagten zweiten Manipulator-Roboter (12′) verbunden ist, behandelt wird.

9. Verfahren nach Anspruch 8,
**dadurch gekennzeichnet,** daß der erste Manipulator-Roboter (12) die Werkstücke in einer ersten Zone festhält, die ein Teil der Oberfläche ist, die von der Einheit für die Bearbeitung und/oder für die Fertigstellung behandelt wurde, die mit dem besagten zweiten Roboter (12′) verbunden ist, und daß der besagte zweite Manipulator-Roboter die Werkstücke in einer zweiten Zone festhält, die ein Teil der Oberfläche ist, die von der Einheit für die Bearbeitung und/oder für die Fertigstellung behandelt wurde, die mit dem besagten ersten Roboter verbunden ist.

10. Verfahren nach Anspruch 7,
**dadurch gekennzeichnet,** daß der erste Manipulator-Rotor (12) die Werkstücke in einer Sicherheitsschleuse aufnimmt, die mit einer Klappe (62) für einen Zugriff von außen versehen ist, wobei diese Klappe geschlossen ist, wenn der Zugang zu der Schleuse durch den Roboter freigegeben ist.

## Claims

1. A machining (10) and/or finishing machine for engineering castings or machined parts, comprising a closed chamber (11), machining and/or finishing units (14, 15, 16, 14′, 15′, 16′) for said parts, a supply device (9) for bringing these parts into said chamber (11), means for supporting said parts and for presenting them to said machining and/or finishing units (14, 15, 16, 14′, 15′, 16′) for their treatment, and means (9′) for evacuating them after said treatment, in which said means for supporting said parts and for presenting them to said machining and/or finishing units (14, 15, 16, 14′, 15′, 16′) comprise two manipulator robots (12, 12′) of the six-axis type, each of these robots being associated with at least one machining and/or finishing unit (14, 15, 16, 14′, 15′, 16′),
**characterised in that** these robots (12, 12′) are designed so that parts can be directly transferred with a view to their successive treatment by said machining and/or finishing units (14, 15, 16, 14′, 15′, 16′).

2. A machine according to claim 1,
**characterised in that** the manipulator robots (12, 12**′**) are of the pendular type and are mounted at the top of said chamber.

3. A machine according to Claim 1,
**characterised in that** the two manipulator robots (12, 12′) are disposed symmetrically with respect to the median plane of the machine,
**and in that** each of these robots is associated with several machining and/or finishing units (14, 15, 16, and 14′, 15′, 16′ respectively).

4. A machine according to Claim 3,
**characterised in that** one of the manipulator robots (12 or 12′) is designed to keep the parts in a first zone intended to be treated by the machining an/or finishing units (14′, 15′, 16′ or 14, 15, 16) associated with the other robot (12′ or 12),
**and in that** this other robot (12′ or 12) is designed to keep the parts in a second zone previously treated by the machining and/or finishing units (14, 15, 16 or 14′, 15′, 16′) associated with the first robot.

5. A machine according to Claim 1,
**characterised in that** the supply device comprises at least one loading device (9, 9′) designed to receive parts to be machined or finished, this device being accessible to at least one of the manipulator robots (12, 12′).

6. A machine according to Claim 5,
**characterised in that** the loading device (9, 9′) comprises a security screen provided with a grille (62) having external access, this grille being closed when access to the screen by one of the robots is authorised.

7. A machining and/or finishing process for engineering castings or machined parts, by means of a machine (10) comprising a closed chamber (11), machining and/or finishing units (14, 15, 16, 14′, 15′, 16′) for said parts, a supply device (9) for bringing these parts into said chamber (11), means (12, 12′) for supporting said parts and for presenting them to said machining and/or finishing units for their treatment, and means (9′) for evacuating them after said treatment,
**characterised in that** the parts are supported by means of a first manipulator robot (12) of the six-axis type, in that these parts are presented to at least,one machining and/or finishing unit associated with said first robot,
**in that** the parts are partially machined and/or finished on this unit,
**in that** these partially machined and/or finished parts are transferred immediately without their intermediate storage to a second manipulator robot (12′) of the six-axis type,
**in that** these parts are presented to at least one machining and/or finishing unit associated with said second robot,
**in that** the pieces which previously have been partially treated are machined and/or finished on this unit,
**and in that** the completely machined and/or finished parts are transferred towards said means for their evacuation.

8. A process according to Claim 7,
**characterised in that** at least one part of the surface of said parts is treated by means of the machining and/or finishing unit associated with said first manipulator robot (12),
**and in that** an other part of the surface of said parts is treated by means of the machining and/or finishing unit associated with said second manipulator robot (12′).

9. A process according to Claim 8,
**characterised in that** the first manipulator robot (12) keeps the parts in a first zone which forms part of the surface treated by the machining and/or finishing unit associated with said second robot (12′),
**and in that** the said second manipulator robot keeps the parts in a second zone which forms part of the surface treated by the machining and/or finishing unit associated with said first robot.

10. A process according to Claim 7,
**characterised in that** the first manipulator robot (12) supports the parts in a security screen provided with a grille (62) having external access, this grille being closed when access by the robot to the screen is authorised.
